(19)

Europäisches
Patentamt
European
Patent Office
Office européen
des brevets

(11)  **EP 3 434 705 A1**

(12)  **EUROPEAN PATENT APPLICATION**
published in accordance with Art. 153(4) EPC

(43) Date of publication:
**30.01.2019 Bulletin 2019/05**

(21) Application number: **16915742.7**

(22) Date of filing: **12.09.2016**

(51) Int Cl.:
**C08G 14/073** *(2006.01)*     **H01M 4/14** *(2006.01)*
**H01M 4/20** *(2006.01)*     **H01M 4/62** *(2006.01)*

(86) International application number:
**PCT/JP2016/076763**

(87) International publication number:
**WO 2018/047324 (15.03.2018 Gazette 2018/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Hitachi Chemical Company, Ltd.**
**Chiyoda-ku**
**Tokyo 100-6606 (JP)**

(72) Inventors:
• **YAMASHITA Takeshi**
  **Tokyo 100-6606 (JP)**
• **KOGURE Kouji**
  **Tokyo 100-6606 (JP)**
• **HARA Kousuke**
  **Tokyo 100-6606 (JP)**

(74) Representative: **Hoffmann Eitle**
**Patent- und Rechtsanwälte PartmbB**
**Arabellastraße 30**
**81925 München (DE)**

(54)  **BISPHENOL BASED RESIN, ELECTRODE, LEAD ACID BATTERY, AND METHOD FOR MANUFACTURING SAME**

(57)  A bisphenol-based resin comrprises a structural unit derived from a reaction of (a) a bisphenol-based compound, (b) at least one selected from the group consisting of an aminobenzenesulfonic acid and an aminobenzenesulfonic acid derivative, and (c) at least one selected from the group consisting of formaldehyde and a formaldehyde derivative, under the presence of a basic compound, wherein the total amount of bisphenol S and a bisphenol S derivative in the component (a) is 0.10 to 0.30 mol with respect to 1.00 mol of the component (a), and the amount of the basic compound is 1.15 mol or more with respect to 1.00 mol of the component (b).

EP 3 434 705 A1

## Description

### Technical Field

The present invention relates to a bisphenol-based resin, an electrode, a lead acid battery, and methods for manufacturing the same.

### Background Art

A lead acid battery for automobiles is widely used for starting an engine, and for supplying an electric power to electrical components. In recent years, a start-stop system (which will be referred to as "ISS", hereafter), which stops the engine when the vehicle temporarily stops, and restarts when the vehicle starts, is coming to be employed as a measure of environmental protection and a fuel consumption improvement. In a lead acid battery that is used in ISS, the number of times of discharging a large current when the engine starts increases because the start and the stop of the engine is frequently repeated, then, it combines with the use of the electrical components to thereby cause discharge loads to become heavy.

The lead acid battery for automobiles is charged by an alternator with a constant-potential charging. In recent years, the set value of the alternator voltage is lowering for the purpose of suppressing the decrease of the electrolytic solution due to an electrolysis of water during charging. In recent years, in addition to the adoption of such a low charge voltage, the so-called power generation control system which is the method of "controlling the charge by the alternator during running according to the running state of vehicles and the charging state of the lead acid battery, to thereby reduce the engine load to aim at improvement in fuel consumption and $CO_2$ reduction" is also adopted. In such a method, the lead acid battery is not easily charged and is therefore unlikely to become a fully charged state. On such a working condition, the lead acid battery becomes often used in a state of being not fully charged and being excessively discharged.

If the lead acid battery has not been completely charged and a state of low charging level is continued, there is a case where a phenomenon "sulfation" occurs, in which lead sulfate, which is an inactive discharge product, accumulates on a polar plate. It is known that, in such a situation, the battery performance such as the cycle characteristics is lowered because of the state in which an active material is not easily reduced (it is not easily charged).

In addition, when complete charging is not easily performed, a stratification phenomenon occurs, in which a difference in the concentration of dilute sulfuric acid, which is an electrolytic solution, arises between an upper part and a lower part of the polar plate in the lead acid battery. In this case, the concentration of dilute sulfuric acid becomes high in the lower part of the polar plate, and therefore, the sulfation occurs. Because of this, the reactivity at the lower part of the polar plate is lowered and only the upper part of the polar plate becomes to react intensively. As a result, a degradation progresses, for example, the connection between active materials becomes weak, and thus the active material in the upper part of the polar plate exfoliates from the current collector (for example, current collecting grid), which supports the active material, to thereby lower the battery performance such as the cycle characteristics.

In these circumstances, the following Patent Literature 1 discloses, as means for improving the cycle characteristics and the like, the technique concerning a negative electrode for the lead acid battery obtained with the use of a negative electrode active material, and a condensate of phenols, an aminobenzenesulfonic acid and formaldehyde.

### Citation List

### Patent Literature

Patent Literature 1: International publication No. WO 1997/37393

## Summary of Invention

### Technical Problem

By the way, it is required for a material for obtaining an electrode of the lead acid battery to obtain excellent cycle characteristics in the lead acid battery.

The present invention has been made in the above described circumstances, and an object of the present invention is to provide a bisphenol-based resin that can obtain the excellent cycle characteristics in a lead acid battery, and a method for manufacturing the same. In addition, another object of the present invention is to provide an electrode and a lead acid battery that use the above described bisphenol-based resin, and methods for manufacturing these.

**Solution to Problem**

The present inventors have made an extensive investigation, and as a result, it has become clear that the sufficient cycle characteristics are not obtained when the negative electrode for the lead acid battery described in the above Patent Literature 1 is used. In contrast to this, the present inventors have found that it is effective to use a bisphenol-based resin which is obtained by a reaction of a bisphenol-based compound, at least one selected from the group consisting of an aminobenzenesulfonic acid and an aminobenzenesulfonic acid derivative, and at least one selected from the group consisting of formaldehyde and a formaldehyde derivative, while using a basic compound; and also have found that the above described problems can be solved by the adjustment of the total amount of bisphenol S and a bisphenol S derivative in the bisphenol-based compound and of the amount of the basic compound.

Specifically, a bisphenol-based resin of the present invention comprises a structural unit derived from a reaction of (a) a bisphenol-based compound, (b) at least one selected from the group consisting of an aminobenzenesulfonic acid and an aminobenzenesulfonic acid derivative, and (c) at least one selected from the group consisting of formaldehyde and a formaldehyde derivative, under the presence of a basic compound, wherein the total amount of bisphenol S and a bisphenol S derivative in the component (a) is 0.10 to 0.30 mol with respect to 1.00 mol of the component (a), and the amount of the basic compound is 1.15 mol or more with respect to 1.00 mol of the component (b).

The method for manufacturing the bisphenol-based resin of the present invention comprises: a step of reacting (a) a bisphenol-based compound, (b) at least one selected from the group consisting of an aminobenzenesulfonic acid and an aminobenzenesulfonic acid derivative, and (c) at least one selected from the group consisting of formaldehyde and a formaldehyde derivative, under the presence of a basic compound, to obtain a bisphenol-based resin, wherein the total amount of bisphenol S and a bisphenol S derivative in the component (a) is 0.10 to 0.30 mol with respect to 1.00 mol of the component (a), and the amount of the basic compound is 1.15 mol or more with respect to 1.00 mol of the component (b).

The bisphenol-based resin and the method for manufacturing the same of the present invention can obtain the excellent cycle characteristics in the lead acid battery. In addition, the bisphenol-based resin and the method for manufacturing the same of the present invention can satisfactorily balance an excellent battery performance such as the charge acceptability, the discharge characteristics and the cycle characteristics.

The factors of the excellent cycle characteristics as described above is considered as follows: in the lead acid battery obtained by using the above described bisphenol-based resin, coarsening of the reactant, which is generated in an electrode reaction of the lead acid battery, is suppressed, thereby a specific surface area of the electrode is kept high, and accordingly the excellent cycle characteristics are obtained. However, the factors are not limited to these.

The amount of the component (b) is preferably 0.50 to 0.95 mol with respect to 1.00 mol of the component (a). The amount of the component (c) is preferably 1.80 to 3.00 mol in terms of formaldehyde with respect to 1.00 mol of the component (a). In these cases, the cycle characteristics tend to be improved.

The component (c) preferably contains paraformaldehyde.

The basic compound preferably contains at least one selected from the group consisting of sodium hydroxide and potassium hydroxide.

The amount of the basic compound is preferably 1.15 to 1.50 mol with respect to 1.00 mol of the component (b).

An electrode of the present invention contains the bisphenol-based resin of the present invention. A method for manufacturing an electrode of the present invention comprises a step of manufacturing an electrode by using the bisphenol-based resin obtained by the method for manufacturing the bisphenol-based resin of the present invention. Also in these cases, the excellent cycle characteristics can be obtained in the lead acid battery.

A lead acid battery of the present invention comprises the electrode of the present invention. A method for manufacturing a lead acid battery of the present invention comprises a step of obtaining the electrode by the method for manufacturing the electrode of the present invention. Also in these cases, the excellent cycle characteristics can be obtained.

**Advantageous Effects of Invention**

The present invention can obtain the excellent cycle characteristics in the lead acid battery. Furthermore, the present invention can satisfactorily balance an excellent battery performance such as the charge acceptability, the discharge characteristics and the cycle characteristics.

The present invention can provide an application of the bisphenol-based resin to the lead acid battery. In particular, the present invention can obtain excellent characteristics in a lead acid battery that has a negative electrode manufactured by using the above described bisphenol-based resin. The present invention can provide an application of the bisphenol-based resin to the negative electrode of the lead acid battery.

The present invention can provide an application of the bisphenol-based resin to the lead acid battery in automobiles. In addition, because of being excellent in the charge acceptability, the present invention can provide the lead acid battery that can be sufficiently satisfied in use for an ISS vehicle which is used in a severe environment. The present invention can provide an application of the bisphenol-based resin to the lead acid battery in the ISS vehicle.

**Brief Description of Drawings**

[Figure 1] Figure 1 is a view showing a measurement result of $^1$H-NMR spectrum of a bisphenol-based resin.
[Figure 2] Figure 2 is a view showing a calibration curve in a measurement of a weight average molecular weight.

**Description of Embodiments**

In the present specification, a numerical range indicated by using "~" indicates a range which includes numerical values described before and after "~" as the minimum value and the maximum value, respectively. In the numerical ranges which are described stepwise in the present specification, the upper limit value or the lower limit value of the numerical range of a certain stage may be replaced with the upper limit value or the lower limit value of the numerical range of another stage. In the numerical ranges that are described in the present specification, the upper limit value or the lower limit value of the numeric value range may be replaced with the value shown in the Examples. "A or B" may include either one of A and B, and may also include both of A and B. Materials which are exemplified in the present specification can be used singly or in combinations of two or more, unless otherwise specifically indicated. When a plurality of substances corresponding to each component exists in the composition, the content of the components in the composition herein means the total amount of the plurality of existing substances in the composition, unless otherwise specifically indicated.
Embodiments of the present invention will be described in detail below.

<Bisphenol-based resin and method for manufacturing the same>

The bisphenol-based resin of the present embodiment comprises a structural unit derived from a reaction of (a) a bisphenol-based compound (hereinafter occasionally referred to as "component (a)"), (b) at least one selected from the group consisting of an aminobenzenesulfonic acid and an aminobenzenesulfonic acid derivative (hereinafter occasionally referred to as "component (b)"), and (c) at least one selected from the group consisting of formaldehyde and a formaldehyde derivative (hereinafter occasionally referred to as "component (c)"), under the presence of a basic compound. The method for manufacturing the bisphenol-based resin of the present embodiment comprises: a step of reacting (a) a bisphenol-based compound, (b) at least one selected from the group consisting of an aminobenzenesulfonic acid and an aminobenzenesulfonic acid derivative, and (c) at least one selected from the group consisting of formaldehyde and a formaldehyde derivative, under the presence of a basic compound. In the bisphenol-based resin and the method for manufacturing the same of the present embodiment, the total amount of bisphenol S and a bisphenol S derivative in the component (a) is 0.10 to 0.30 mol with respect to 1.00 mol of the component (a), and the amount of the basic compound is 1.15 mol or more with respect to 1.00 mol of the component (b).
The bisphenol-based resin and the method for manufacturing the same of the present embodiment can obtain the excellent cycle characteristics in the lead acid battery. In addition, the bisphenol-based resin and the method for manufacturing the same of the present embodiment can satisfactorily balance an excellent battery performance such as the charge acceptability, the discharge characteristics and the cycle characteristics. Furthermore, the bisphenol-based resin and the method for manufacturing the same of the present embodiment can obtain the excellent storage stability of the bisphenol-based resin. The factors of the excellent storage stability as described above is considered as follows: the total amount of the bisphenol S and the bisphenol S derivative and the amount of the basic compound are within the above described ranges, thereby a content of a reactive portion (portion which can react during storage, such as benzoxazine ring, methylol group structure and the like) in the bisphenol-based resin is reduced, and accordingly the excellent storage stability is obtained. However, the factors are not limited to these.
Components for obtaining the bisphenol-based resin and the like will be described below.

(Component (a): bisphenol-based compound)

The bisphenol-based compound is a compound having two hydroxyphenyl groups. Examples of the bisphenol-based compound includes bis(4-hydroxyphenyl)sulfone (hereinafter referred to as "bisphenol S"), 2,2-bis(4-hydroxyphenyl)propane (hereinafter referred to as "bisphenol A"), bis(4-hydroxyphenyl)methane (hereinafter referred to as "bisphenol F"), 1,1-bis(4-hydroxyphenyl)ethane, 2,2-bis(4-hydroxyphenyl)hexafluoropropane, 1,1-bis(4-hydroxyphenyl)-1-phenylethane, 2,2-bis(4-hydroxyphenyl)butane, bis(4-hydroxyphenyl)diphenylmethane, 1,1-bis(4-hydroxyphenyl)cyclohexane, 1,1-bis(4-hydroxyphenyl)-3,3,5-trimethyleyclohexane, and derivative of these. The component (a) can be used singly or in combinations of two or more.

Examples of the bisphenol S derivative include 2,4-dihydroxydiphenyl sulfone, 2,2',5,5'-tetrahydroxydiphenyl sulfone, 4-isopropyloxyphenyl-4'-hydroxysulfone, 4-benzyloxyphenyl-4'-hydroxyphenylsulfone, 4-methoxyphenyl-4'-hydroxyphenylsulfone, 4-n-hexyloxyphenyl-4'-hydroxyphenylsulfone, 4-n-octyloxyphenyl-4'-hydroxyphenylsulfone, 3,3'-dimethyl-4,4'-dihydroxydiphenyl sulfone, 4,4',5,5'-tetramethyl-2,2'-dihydroxydiphenyl sulfone, 2,2',5,5'-tetramethyl-4,4'-dihydroxydiphenyl sulfone, 3,3'-dichloro-4,4'-dihydroxydiphenyl sulfone, 3,3'-dinitro-4,4'-dihydroxydiphenyl sulfone, 3,3'-diamino-4,4'-dihydroxydiphenyl sulfone, bis[4-(2-hydroxyethoxy) phenyl] sulfone, and 4,4'-sulfonylbis(6-(tert-butyl)-m-cresol).

Examples of the bisphenol A derivative include 2,2-bis(4-hydroxy-3-methylphenyl) propane, 2,2-bis(4-hydroxy-3-isopropylphenyl) propane, 2,2-bis(3-amino-4-hydroxyphenyl) propane, and 2,2-bis(2-hydroxy-5-biphenylyl) propane.

The component (a) contains at least one selected from the group consisting of the bisphenol S and the bisphenol S derivative. By using at least one selected from the group consisting of the bisphenol S and the bisphenol S derivative, the excellent discharge characteristics are easily obtained.

The total amount of the bisphenol S and the bisphenol S derivative in the component (a) is 0.10 to 0.30 mol with respect to 1.00 mol of the component (a). Thereby, it is possible to obtain the excellent cycle characteristics, and to satisfactorily balance the excellent battery performance such as the charge acceptability, the discharge characteristics and the cycle characteristics. The total amount of the bisphenol S and the bisphenol S derivative is preferably 0.125 mol or more, more preferably 0.15 mol or more, and further preferably 0.20 mol or more, with respect to 1.00 mol of the component (a), in view of improving the charge acceptability, the discharge characteristics and the cycle characteristics in a well-balanced manner. The total amount of the bisphenol S and the bisphenol S derivative may be 0.275 mol or less, and may be 0.25 mol or less, with respect to 1.00 mol of the component (a). The total amount of the bisphenol S and the bisphenol S derivative in the component (a) can be calculated, for example, by a method of quantifying the total amount of sulfur by atomic absorption spectrometry, and then removing the amount of sulfur derived from the component (b); a method using NMR ($^{13}$C-NMR, $^1$H-NMR or the like); or the like. The method for measuring the amount of sulfur and the measurement method by NMR are as follows, for example.

[Measurement of amount of sulfur]

Firstly, the solvent or the like is distilled off under reduced pressure (for example, in thermostatic bath set at 40°C for 12 hours) to isolate the bisphenol-based resin. Then, an acid is added to the isolated bisphenol-based resin, and then heating is performed by a microwave decomposer (for example, ETHOS PRO made by Milestone General K.K.) to be subjected to acidolysis. The acidolysis solution is diluted with ultrapure water, and then the amount of sulfur is quantified with an atomic absorption spectrometer (for example, Z-5010 made by Hitachi High-Technologies Corporation).

[NMR measurement]

Firstly, the solvent or the like is distilled off under reduced pressure (for example, in thermostatic bath set at 40°C for 12 hours) to isolate the bisphenol-based resin. Then, deuterodimethyl sulfoxide is added to the isolated bisphenol-based resin, and then NMR spectrum is measured.

{NMR conditions}

Apparatus: ECX 400 II (made by JEOL RESONANCE Inc.)
Measurement temperature: 30°C
Measurement solvent: DMSO-$d_6$ (made by Wako Pure Chemical Industries, Ltd.)

The component (a) preferably further contains at least one selected from the group consisting of bisphenol A and bisphenol A derivative, in view of improving the charge acceptability, the discharge characteristics and the cycle characteristics in a well-balanced manner. In this case, the total amount of the bisphenol A and the bisphenol A derivative in the reaction for obtaining the bisphenol-based resin is preferably 0.50 mol or more, more preferably 0.55 mol or more, further preferably 0.60 mol or more, and particularly preferably 0.70 mol or more, with respect to 1.00 mol in total of the bisphenol A, the bisphenol A derivative, the bisphenol S and the bisphenol S derivative, in view of improving the charge acceptability, the discharge characteristics and the cycle characteristics in a well-balanced manner. The above described total amount of the bisphenol A and bisphenol A derivative may be 0.75 mol or more, or may be 0.80 mol or more. The total amount of the bisphenol A and the bisphenol A derivative is preferably 0.99 mol or less, more preferably 0.98 mol or less, further preferably 0.97 mol or less, particularly preferably 0.95 mol or less, and extremely preferably 0.90 mol or less, with respect to 1.00 mol in total of the bisphenol A, the bisphenol A derivative, the bisphenol S and the bisphenol S derivative, in view of improving the charge acceptability, the discharge characteristics and the cycle characteristics in a well-balanced manner.

(Component (b): aminobenzenesulfonic acid and aminobenzenesulfonic acid derivative)

Examples of the aminobenzenesulfonic acid include 2-aminobenzenesulfonic acid (also known as orthanilic acid), 3-aminobenzenesulfonic acid (also known as metanilic acid), and 4-aminobenzenesulfonic acid (also known as sulfanilic acid).

Examples of the aminobenzenesulfonic acid derivative include a compound formed by replacing part of a hydrogen atom of the aminobenzenesulfonic acid with an alkyl group (for example, alkyl group having 1 to 5 carbon atoms), and a compound formed by replacing a hydrogen atom of a sulfonic group ($-SO_3H$) of the aminobenzenesulfonic acid with an alkali metal (for example, sodium and potassium). Examples of the compound formed by replacing part of hydrogen atoms of the aminobenzenesulfonic acid with an alkyl group include 4-(methylamino) benzenesulfonic acid, 3-methyl-4-aminobenzenesulfonic acid, 3-amino-4-methylbenzene sulfonic acid, 4-(ethylamino) benzenesulfonic acid, and 3-(ethylamino)-4-methylbenzene sulfonic acid. Examples of the compound formed by replacing the hydrogen atom of the sulfonic group of the aminobenzenesulfonic acid with an alkali metal include sodium 2-aminobenzenesulfonate, sodium 3-aminobenzenesulfonate, sodium 4-aminobenzenesulfonate, potassium 2-aminobenzenesulfonate, potassium 3-aminobenzenesulfonate, and potassium 4-aminobenzenesulfonate.

The component (b) can be used singly or in combinations of two or more. 4-aminobenzenesulfonic acid is preferable as the component (b), in view of further improving the charge acceptability and the cycle characteristics.

The amount of the component (b) in the reaction for obtaining the bisphenol-based resin is preferably 0.50 mol or more, more preferably 0.55 mol or more, further preferably 0.60 mol or more, particularly preferably 0.70 mol or more, and extremely preferably 0.80 mol or more, with respect to 1.00 mol of the component (a), in view of further improving the discharge characteristics. The amount of the component (b) is preferably 0.95 mol or less, more preferably 0.93 mol or less, and further preferably 0.90 mol or less, with respect to 1.00 mol of the component (a), in view of further improving the discharge characteristics and the cycle characteristics. The amount of the component (b) is, for example, 0.50 to 0.95 mol with respect to 1.00 mol of the component (a). The amount of the component (b) at the time of the reaction can be calculated, for example, by quantifying a nitrogen component (nitrogen component derived from amino group of component (b)), based on the elemental analysis (carbon, hydrogen and nitrogen) of the bisphenol-based resin. A quantitative analysis of the nitrogen component can be carried out, for example, according to the following method.

[Quantitative analysis of nitrogen component]

Firstly, the solvent or the like is distilled off under reduced pressure (for example, in thermostatic bath set at 40°C for 12 hours) to isolate the bisphenol-based resin. Then, the content of the nitrogen component is quantified, based on the elemental analysis (carbon, hydrogen and nitrogen) of the isolated bisphenol-based resin.

{Quantitative analysis conditions}

Element analyzer: vario MICRO cube made by Elementar Analysensysteme GmbH
Temperature of baking furnace: 1150°C
Flow rate of helium: 200 mL/min
Temperature of reducing furnace: 850°C
Flow rate of oxygen: 20 to 30 mL/min

(Component (c): formaldehyde and formaldehyde derivative)

Formaldehyde in formalin (for example, aqueous solution of 37 mass% of formaldehyde) may be used as formaldehyde. Examples of the formaldehyde derivative include paraformaldehyde, hexamethylenetetramine, and trioxane. The component (c) can be used singly or in combinations of two or more. Formaldehyde and a formaldehyde derivative may be used together.

Formaldehyde derivative is preferable as the component (c), and paraformaldehyde is more preferable, in view of easiness to obtain the excellent cycle characteristics. The paraformaldehyde has, for example, the following structure:

$$HO(CH_2O)_{n1}H \ldots \qquad (I)$$

[In formula (I), n1 represents an integer of 2 to 100.]

The amount of the component (c) in terms of formaldehyde in the reaction for obtaining the bisphenol-based resin is preferably 1.80 mol or more, more preferably 1.90 mol or more, further preferably 2.00 mol or more, particularly preferably 2.10 mol or more, and extremely preferably 2.20 mol or more, with respect to 1.00 mol of the component (a), in view of improving the reactivity of the component (b). The amount of the component (c) in terms of formaldehyde is preferably 3.00 mol or less, more preferably 2.75 mol or less, further preferably 2.50 mol or less, particularly preferably 2.40 mol or less, and extremely preferably 2.30 mol or less, with respect to 1.00 mol of the component (a), in view of excellent solubility of the obtained bisphenol-based resin into a solvent. The amount of the component (c) in terms of formaldehyde is, for example, 1.80 to 3.00 mol with respect to 1.00 mol of the component (a).

(Basic compound)

Examples of the basic compound include sodium hydroxide, potassium hydroxide, calcium hydroxide, magnesium hydroxide, and sodium carbonate. The basic compounds can be used singly or in combinations of two or more. A strongly basic compound such as sodium hydroxide and potassium hydroxide can be used as the basic compound. Among the basic compounds, at least one selected from the group consisting of the sodium hydroxide and the potassium hydroxide is preferable, in view of excellent reactivity.

The amount of the basic compound is 1.15 mol or more with respect to 1.00 mol of the component (b). Thereby, it is possible to obtain the excellent cycle characteristics and also to satisfactorily balance the excellent battery performance such as the charge acceptability, the discharge characteristics and the cycle characteristics; and furthermore, it is easy to obtain an adjusted pH of a reaction solution which will be described later. The amount of the basic compound is preferably 1.16 mol or more, more preferably 1.18 mol or more, and further preferably 1.20 mol or more, with respect to 1.00 mol of the component (b), in view of improving the charge acceptability, the discharge characteristics and the cycle characteristics in a well-balanced manner. The amount of the basic compound is preferably 1.50 mol or less, more preferably 1.45 mol or less, further preferably 1.40 mol or less, particularly preferably 1.35 mol or less, and extremely preferably 1.30 mol or less, with respect to 1.00 mol of the component (b), in view of improving the charge acceptability, the discharge characteristics and the cycle characteristics in a well-balanced manner, and in view of easily and stably obtaining the bisphenol-based resin. The amount of the basic compound at the time of the reaction can be quantified from an ICP-OES analysis of the bisphenol-based resin, or the like, and for example, when sodium hydroxide is used as the basic compound, the amount of the basic compound can be specified by a quantitation of a sodium ion. The sodium ion can be quantified, for example, according to the following method.

[Quantitation of sodium ion]

Firstly, the solvent or the like is distilled off under reduced pressure (for example, in thermostatic bath set at 40°C for 12 hours) to isolate the bisphenol-based resin. Then, an acid is added to the isolated bisphenol-based resin, and then heating is performed by a microwave decomposer (for example, ETHOS PRO made by Milestone General K.K.) to be subjected to acidolysis. The acidolysis solution is diluted with ultrapure water, and then the amount of the sodium ion is quantified with an ICP-OES analyzer (for example, SPS 5100, made by Hitachi High-Tech Science Corporation).

When the reaction solution at the time of reaction is neutral (pH = 7), there is a case where the production reaction of the bisphenol-based resin does not easily progress, and when the reaction solution is acidic (pH<7), there is a case where a side reaction (for example, production reaction of structural unit having benzoxazine ring) progresses. Because of this, the pH of the reaction solution at the time of reaction is preferably alkaline (over 7), more preferably 7.1 or higher, and further preferably 7.2 or higher, in view of easiness to suppress the progress of the side reaction while progressing the production reaction of the bisphenol-based resin. The pH of the reaction solution is preferably 12 or lower, more preferably 11 or lower, and further preferably 10 or lower, in view of suppressing the progress of hydrolysis of a group derived from the component (b) of the bisphenol-based resin. The pH of the reaction solution can be measured, for example, with a twin pH meter AS-212 made by Horiba, Ltd. The pH is defined as a pH at 25°C.

In the synthetic reaction of the bisphenol-based resin, the component (a), the component (b) and the component (c) can react to obtain the bisphenol-based resin, for example, the component (a), the component (b) and the component (c) may be allowed to simultaneously react, alternatively, two components out of the component (a), the component (b) and the component (c) may be allowed to react, followed by reacting the remaining one component.

It is preferable to carry out the synthetic reaction of the bisphenol-based resin in the following two steps. In a reaction of the first step, for example, the component (b), a solvent (water or the like) and a basic compound are placed and then stirred to substitute the hydrogen atom of the sulfonic group in the component (b) with the alkali metal or the like, to obtain an alkali metal salt of the component (b) or the like. Thereby, it is easy to suppress the side reaction in a condensation reaction described later. The temperature of the reaction system is preferably 0°C or higher, and more preferably 25°C or higher, in view of the excellent solubility of the component (b) to the solvent (water or the like). The temperature of the reaction system is preferably 80°C or lower, more preferably 70°C or lower, and further preferably 65°C or lower, in view of easiness to suppress the side reaction. The reaction time is, for example, 30 minutes.

In a reaction of the second step, for example, the component (a) and the component (c) are added to the reactant obtained in the first step to carry out a condensation reaction, to obtain the bisphenol-based resin. The temperature of the reaction system is preferably 75°C or higher, more preferably 80°C or higher, and further preferably 90°C or higher, in view of the excellent reactivity of the component (a), the component (b) and the component (c), and in view of the further excellent storage stability of the bisphenol-based resin. The temperature of the reaction system is preferably 100°C or lower, more preferably 99°C or lower, further preferably 98°C or lower, in view of easiness to suppress the side reaction. The reaction time is, for example, 5 to 20 hours.

The weight average molecular weight of the bisphenol-based resin of the present embodiment is preferably 20000 or more, more preferably 30000 or more, further preferably 40000 or more, and particularly preferably 50000 or more, in view of suppressing the elution of the bisphenol-based resin from the electrode to an electrolytic solution in the lead acid battery to thereby easily improve the cycle characteristics. The weight average molecular weight of the bisphenol-based resin is preferably 150000 or less, more preferably 130000 or less, further preferably 110000 or less, particularly preferably 100000 or less, extremely preferably 80000 or less, and very preferably 70000 or less, in view of suppressing the lowering of adsorptivity to an electrode active material to thereby easily improve the cycle characteristics.

The weight average molecular weight of the bisphenol-based resin can be measured, for example, by gel permeation chromatography (hereinafter referred to as "GPC") on the following conditions.

(GPC conditions)

Apparatus: High performance liquid chromatograph LC-2200 Plus (made by JASCO Corporation)

Pump: PU-2080
Differential refractometer: RI-2031
Detector: Ultraviolet visible absorptiometer UY-2075 ($\lambda$: 254 nm)
Column oven: CO-2065

Column: GF-1G7B+GF-7MHQ$\times$2 (made by Showa Denko K.K.)
Column temperature: 40°C
Eluent: solution obtained by mixing methanol and pure water so that the content of methanol containing LiBr (20 mM) and triethylamine (400 mM) becomes 40 vol% Flow rate: 0.6 mL/min
Molecular weight standard sample: polyethylene oxide (molecular weight: $5.80\times10^5$, $2.55\times10^5$, $1.46\times10^5$, $1.01\times10^5$, $4.49\times10^4$, $2.70\times10^4$, $2.10\times10^4$; made by Tosoh Corporation), and polyethylene glycol (molecular weight: $6.00\times10^3$, $4.00\times10^3$, $1.00\times10^3$; made by Wako Pure Chemical Industries, Ltd.)

<Resin composition>

The resin composition of the present embodiment contains the bisphenol-based resin of the present embodiment. The resin composition of the present embodiment is a composition that contains, for example, a bisphenol-based resin and a solvent (water or the like), and is a resin solution which is a liquid at 25°C, for example. Examples of the solvent include water (for example, ion exchanged water), and an organic solvent. The solvent contained in the resin composition may be a reaction solvent which is used for obtaining the bisphenol-based resin.

The nonvolatile matter content in the resin composition of the present embodiment is preferably 10 mass% or more, more preferably 15 mass% or more, and further preferably 20 mass% or more, in view of the further excellent solubility of the bisphenol-based resin and the further excellent battery characteristics. From the same viewpoint, the nonvolatile matter content in the resin composition of the present embodiment is preferably 50 mass% or less, more preferably 45 mass% or less, and further preferably 40 mass% or less.

The nonvolatile matter content can be measured, for example, by the following procedure. Firstly, a predetermined amount (for example, 2 g) of the resin composition is placed in a container (for example, metallic petri dish such as stainless steel petri dish), and then the resin composition is dried at 150°C for 60 minutes with the use of a hot-air drier. Next, after the temperature of the container has returned to room temperature (for example, 25°C), a residual mass is measured. The nonvolatile matter content is calculated from the following expression.

$$\text{Nonvolatile matter content (mass\%)} = [(\text{residual mass after drying})/(\text{mass of resin composition before drying})] \times 100$$

<Electrode, lead acid battery, and methods for manufacturing the same>

The electrode of the present embodiment contains the bisphenol-based resin of the present embodiment. An electrode of the present embodiment is manufactured with the use of, for example, a raw material of an electrode active material, and the bisphenol-based resin of the present embodiment or a resin composition that contains the bisphenol-based resin. A method for manufacturing the electrode of the present embodiment comprises a step of manufacturing an electrode by using the bisphenol-based resin obtained by the method for manufacturing the bisphenol-based resin of the present embodiment. In the present embodiment, the reactant (reaction solution) obtained by the method for manufacturing the bisphenol-based resin may be used for a manufacture of the electrode as it is; or the bisphenol-based resin obtained by drying the reactant may be dissolved in a solvent (water or the like), and then may be used for the manufacture of the electrode. The formed electrode has, for example, an electrode layer containing a raw material of the electrode active material and the like, and the current collector supporting the electrode layer. The electrode after the formation has, for example, an electrode layer containing the electrode active material and the like, and the current collector supporting the electrode layer. The electrode is, for example, a negative electrode (negative electrode plate or the like) for a lead acid battery.

A lead acid battery of the present embodiment comprises the electrode of the present embodiment. Examples of the lead acid battery of the present embodiment include a liquid type lead acid battery, and a closed type lead acid battery; and the liquid type lead acid battery is preferable. The method for manufacturing the lead acid battery of the present embodiment comprises, for example, an electrode manufacturing step of obtaining the electrode by the method for manufacturing the electrode of the present embodiment; and an assembling step of assembling constituent members containing the electrode to obtain the lead acid battery.

In the electrode manufacturing step, for example, an unformed electrode is obtained by filling the current collector (for example, current collecting grid) with an electrode material paste, and then aging and drying. The electrode material paste contains, for example, a raw material of the electrode active material and the bisphenol-based resin, and may further contain other predetermined additives and the like. When the electrode is the negative electrode, the raw material of the negative electrode active material is preferably a lead powder (for example, mixture of powder of PbO and scale-like metal lead). Examples of the additive include barium sulfate, a carbon material (excluding carbon fibers), and a short fiber for reinforcement (acrylic fiber, polyethylene fiber, polypropylene fiber, polyethylene terephthalate fiber, carbon fiber and the like). Examples of the carbon material include carbon black and graphite. Examples of the carbon black include furnace black (Ketchen black (registered trademark) and the like), channel black, acetylene black and thermal black.

When the electrode of the present embodiment is the negative electrode, a negative electrode material paste can be obtained, for example, by the following method. Firstly, a mixture is obtained by mixing a lead powder with the bisphenol-based resin or a resin composition containing the bisphenol-based resin, and an additive that is added as needed. Next, sulfuric acid (dilute sulfuric acid or the like) and a solvent (water or the like) are added to this mixture and kneading is performed to thereby obtain the negative electrode material paste. An unformed negative electrode can be obtained by filling the current collector (current collecting grid or the like) with this negative electrode material paste, and then aging and drying.

When the barium sulfate is used in the negative electrode material paste, the amount of the barium sulfate is preferably 0.01 to 1 mass% based on the total mass of the raw material of the negative electrode active material. When the carbon material is used, the amount of the carbon material is preferably 0.2 to 1.4 mass% based on the total mass of the raw material of the negative electrode active material. The amount of the bisphenol-based resin or the resin composition containing the bisphenol-based resin of the present embodiment is preferably 0.01 to 2 mass%, more preferably 0.05 to 1 mass%, and further preferably 0.1 to 0.5 mass%, in terms of the solid resin content, based on the total mass of the raw material of the negative electrode active material.

Examples of the composition of the current collector include a lead alloy such as a lead-calcium-tin-based alloy and a lead-antimony-arsenic-based alloy. Selenium, silver, bismuth or the like may be appropriately added to the current collector according to the application. The current collector can be obtained by forming these lead alloys into a lattice shape by a gravity casting method, an expanding method, a stamping method or the like.

The aging condition is preferably 15 to 60 hours in an atmosphere at a temperature of 35 to 85°C and a humidity of 50 to 98 RH%. The drying condition is preferably 15 to 30 hours at a temperature of 45 to 80°C.

A positive electrode (positive electrode plate or the like) for the lead acid battery can be obtained, for example, by the following method. Firstly, the short fiber for reinforcement is added to the lead powder which is the raw material of the positive electrode active material, and then water and dilute sulfuric acid are added thereto to obtain a mixture. Then, this mixture is kneaded to produce a positive electrode material paste. When the positive electrode material paste is produced, red lead ($Pb_3O_4$) may be added in view of shortening a formation time. An unformed positive electrode can be obtained by filling the current collector (current collecting grid or the like) with this positive electrode material paste, and then aging and drying. In the positive electrode material paste, the amount of the short fiber for reinforcement is preferably 0.005 to 0.3 mass% based on the total mass of the lead powder. The type of the current collector, the aging condition and the drying condition are almost similar to those in the case of the negative electrode.

In the assembling step, for example, the unformed negative electrode and positive electrode that have been produced as described above are alternately layered via a separator, and electrodes (electrode plates or the like) that have the same polarity are connected (welded or the like) to each other with a strap, to thereby obtain an electrode group (polar plate group or the like). This electrode group is arranged in a battery case to produce an unformed battery. Next, the dilute sulfuric acid is injected into the unformed battery, and then a direct current is passed to perform the formation to obtain the lead acid battery. It is also possible to eliminate the dilute sulfuric acid once, and then inject the electrolytic solution. The specific gravity of sulfuric acid (in terms of 20°C, before the formation) is preferably 1.25 to 1.35.

The negative electrode active material can be obtained by aging and drying the negative electrode material paste containing the raw material of the negative electrode active material to thereby obtain an unformed active material, and then performing the formation. The negative electrode active material after the formation preferably contains a porous spongy lead (Spongy Lead). The positive electrode active material can be obtained by aging and drying the positive electrode material paste containing the raw material of the positive electrode active material to obtain an unformed active material, and then performing the formation. The positive electrode active material after the formation contains, for example, lead dioxide.

Examples of the material of the separator include polyethylene and a glass fiber. The conditions of the formation and the specific gravity of the sulfuric acid can be adjusted according to the properties of the electrode active material. In addition, the formation treatment is not limited to be performed in the assembling step, but may be performed in the electrode manufacturing step.

**Examples**

The present invention will be specifically described below with reference to Examples. However, the present invention is not limited to only the following Examples.

<Production of bisphenol-based resin and resin solution>

[Example 1]

Each of the following components was placed in a reaction container having a stirring device, a refluxing device and a temperature adjustment device to obtain a first mixture liquid.

Sodium hydroxide: 1.04 mol [41.6 parts by mass]
Ion exchange water: 44.48 mol [800.7 parts by mass]
4-aminobenzenesulfonic acid: 0.80 mol [138.6 parts by mass]

The first mixture liquid was mixed and stirred at 40°C for 30 minutes. Subsequently, each of the following components was added to the first mixture liquid to obtain a second mixture liquid.
Bisphenol A: 0.80 mol [182.6 parts by mass]
Bisphenol S: 0.20 mol [50.1 parts by mass]
Paraformaldehyde (made by Mitsui Chemicals, Inc.): 2.25 mol [67.6 parts by mass] (in terms of formaldehyde)

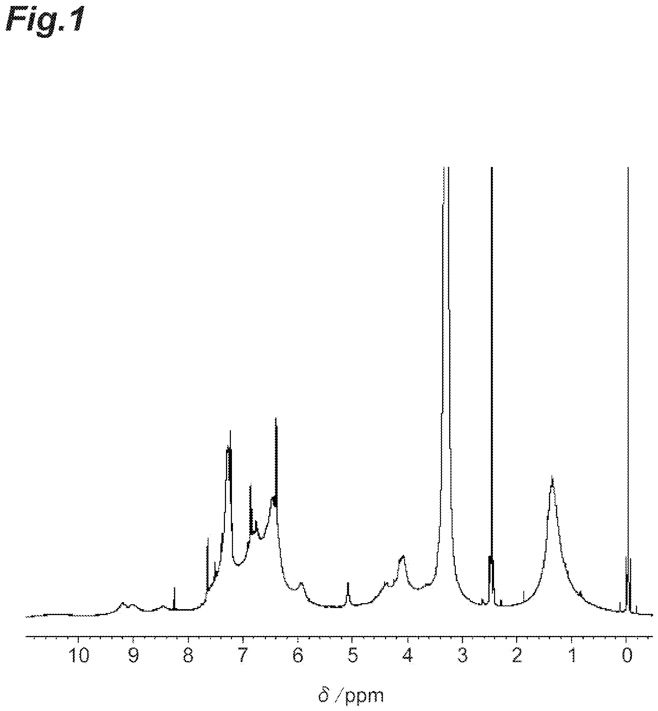

A resin solution was obtained by reacting the second mixture liquid (pH = 8.6) at 95°C for 11 hours, and then adding 7.47 mol (134.5 parts by mass) of ion exchanged water thereto. The bisphenol-based resin contained in the resin solution obtained in Example 1 was isolated by drying at a low temperature (40°C for 12 hours). The $^1$H-NMR spectrum of the isolated bisphenol-based resin was measured under the following conditions. The result is shown in Figure 1.

(NMR conditions)

Apparatus: ECX 400 II (made by JEOL RESONANCE Inc.)
Measurement temperature: 30°C
Measurement solvent: DMSO-$d_6$ (made by Wako Pure Chemical Industries, Ltd.)

[Examples 2 to 9 and Comparative Examples 1 to 5]

The bisphenol-based resins and the resin solutions of Examples 2 to 9 and Comparative Examples 1 to 5 were obtained by the same method as in Example 1, except that the constituent component of the resin solution was changed to components shown in Tables 1 and 2. In Tables, the amounts of paraformaldehyde and 37 mass% formalin are the amounts in terms of formaldehyde.

[Measurement of nonvolatile matter content]

The nonvolatile matter content of the resin solution was measured by the following procedure. Firstly, 2 g of the resin solution was placed in a container (stainless steel petri dish) with 50 mm$\phi \times$15 mm, and then the resin solution was dried at 150°C for 60 minutes with the use of a hot air drier. Next, after the temperature of the container had returned to room temperature (25°C), a residual mass was measured to thereby measure the nonvolatile matter content. The result is shown in Tables 1 and 2.

[Measurement of pH]

After the reaction had been completed, 500 $\mu$L of the resin solution was placed in a sensor portion of the following pH measurement device, and the pH of the resin solution was measured. The result is shown in Tables 1 and 2.

(Conditions of pH measurement)

pH measurement device: Twin pH meter AS-212 made by Horiba, Ltd.
Calibration liquid: pH calibration liquid made by Wako Pure Chemical Industries, Ltd. (pH 4.01 and pH 6.86)
Measurement temperature: 25°C

[Measurement of weight average molecular weight]

The weight average molecular weight of the isolated bisphenol-based resin was measured with GPC on the following conditions. The result is shown in Tables 1 and 2.

(GPC conditions)

Apparatus: High performance liquid chromatograph LC-2200 Plus (made by JASCO Corporation)

Pump: PU-2080
Differential refractometer: RI-2031
Detector: Ultraviolet visible absorptiometer UV-2075 ($\lambda$: 254 nm)
Column oven: CO-2065

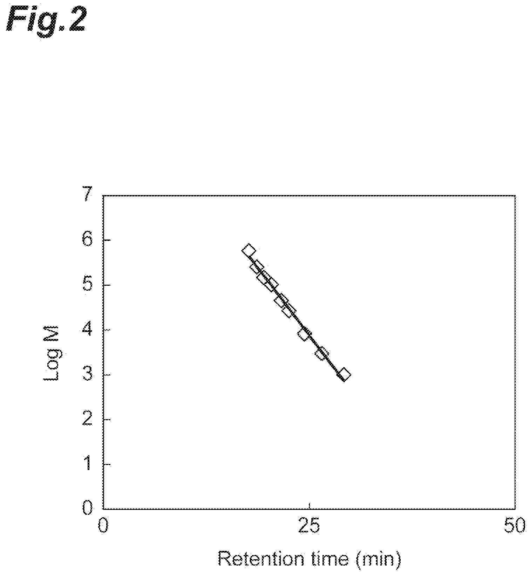

Column: GF-1G7B+GF-7MHQ$\times$2 (made by Showa Denko K.K.)
Column temperature: 40°C
Eluent: solution obtained by mixing methanol and pure water so that the content of methanol containing LiBr (20 mM) and triethylamine (400 mM) becomes 40 vol% Flow rate: 0.6 mL/minute
Molecular weight standard sample: polyethylene oxide (molecular weight: $5.80\times10^5$, $2.55\times10^5$, $1.46\times10^5$, $1.01\times10^5$, $4.49\times10^4$, $2.70\times10^4$ and $2.10\times10^4$ ; made by Tosoh Corporation), and polyethylene glycol (molecular weight: $6.00\times10^3$, $4.00\times10^3$, $1.00\times10^3$; made by Wako Pure Chemical Industries, Ltd.)
The calibration curve calculated from the above described standard sample is shown in Figure 2. The abscissa shows a retention time, and the ordinate shows a logarithm of the molecular weight.

<Production of negative electrode plate>

Based on the total mass of the lead powder, 0.2 mass% of the resin solution in terms of the solid content, 0.2 mass% of furnace black and 1.0 mass% of barium sulfate were added to a lead powder, and then dry mixing was performed. Next, kneading was performed while dilute sulfuric acid (specific gravity of 1.26 (in terms of 20°C)) and water were added, to thereby produce a negative electrode material paste. An expanded current collector (lead-calcium-tin-based alloy) with a thickness of 0.6 mm was filled with the negative electrode material paste to produce a negative electrode plate. Using a usual method, the negative electrode plate was left for 18 hours in an atmosphere at a temperature of 50°C and a humidity of 95% to be aged, and then drying was performed in an atmosphere at a temperature of 50°C to obtain an unformed negative electrode plate.

<Production of positive electrode plate>

Based on the total mass of the lead powder, 0.01 mass% of a short fiber for reinforcement (polyethylene fiber) was added to a lead powder, and then dry mixing was performed. Next, a dilute sulfuric acid (specific gravity of 1.26 (in terms of 20°C)) and water were added thereto, and kneading was performed to produce a positive electrode material paste. A positive electrode current collector (cast grid body, lead-calcium-tin alloy) was filled with the positive electrode material paste; and it was left for 18 hours in an atmosphere at a temperature of 50°C and a humidity of 95% to be aged, and then drying was performed in an atmosphere at a temperature of 50°C to obtain an unformed positive electrode plate.

<Assembly of battery>

The unformed negative electrode plate was inserted into a separator that was made from polyethylene and was in a sack shape. Next, so that the unformed positive electrode plates, and the unformed negative electrode plates inserted into the above described sack-shaped separators were alternately layered, six unformed negative electrode plates and five unformed positive electrode plates were layered. Subsequently, ear portions of the polar plates having the same polarity were welded to each other by a cast-on strap (COS) method to produce a polar plate group. The above described polar plate group was inserted into a battery case to assemble a 2V single cell battery. Into this battery, a dilute sulfuric acid (specific gravity of 1.28 (in terms of 20°C)) was injected, and then the formation was performed in a water bath at 50°C on the conditions of a passing current of 10A and 16 hours to obtain the lead acid battery.

<Evaluation of battery characteristics>

The charge acceptability, the discharge characteristics and the cycle characteristics of the above described 2V single cell battery were measured in the following manner. The measurement results of the charge acceptability, the discharge characteristics and the cycle characteristics of Comparative Example 1 were each defined as 100, and each of the characteristics was relatively evaluated. The result is shown in Tables 1 and 2.

(Charge acceptability)

As for the charge acceptability, in a state in which the state of charge (SOC) of the battery has become 90% (in other words, 10% of the battery capacity was discharged from a fully charged state), charging was performed at a constant voltage of 2.33 V at 25°C, and an electric current value was measured 5 seconds after the charging was started. As the electric current value after 5 seconds is larger, it is evaluated as the battery having more adequate initial charge acceptability.

(Discharge characteristics)

As for the discharge characteristics, discharging was performed at a constant current of 5C at -15°C, and a discharge duration time was measured until the voltage of the battery has reached 1.0 V As the discharge duration time is longer, it is evaluated as the battery having more excellent discharge characteristics. The above described C relatively represents a magnitude of an electric current when a rated capacity is discharged at a constant current from the fully charged state, and means "discharge current value (A) / battery capacity (Ah)".

(Cycle characteristics)

The cycle characteristics were evaluated by a method according to light load life test (JIS D 5301) in Japanese Industrial Standard. As the number of cycles is larger, it is evaluated as the battery having higher durability.

<Evaluation of storage stability>

The storage stability was measured according to the following procedure. 30 mL of the resin solution was placed in a glass container with $\phi$30 mm $\times$ 65 mm, and then stored at 40°C using a thermostatic bath. Every one month, the above described 2V single cell battery was produced by using this resin solution, and the above described battery characteristics were measured. The charge acceptability, the discharge characteristics and the cycle characteristics were evaluated as the battery characteristics by the same method as described above. It was evaluated that the stockable limit was reached when the charge acceptability had decreased by 2%, the discharge characteristics had decreased by 2%, or the cycle characteristics had decreased by 10%, as compared with before storage. The result is shown in Tables 1 and 2.

[Table 1]

| | | Example 1 | Example 2 | Example 3 | Example 4 | Example 5 | Example 6 | Example 7 | Example 8 | Example 9 |
|---|---|---|---|---|---|---|---|---|---|---|
| Bisphenol A | Parts by mass (mol) | 182.6 (0.80) | 182.6 (0.80) | 205.5 (0.90) | 205.5 (0.90) | 205.5 (0.90) | 159.8 (0.70) | 205.5 (0.90) | - | 182.6 (0.80) |
| Bisphenol S | Parts by mass (mol) | 50.1 (0.20) | 50.1 (0.20) | 25.0 (0.10) | 25.0 (0.10) | 25.0 (0.10) | 75.1 (0.30) | 25.0 (0.10) | 25.0 (0.10) | 50.1 (0.20) |
| Bisphenol F | Parts by mass (mol) | - | - | - | - | - | - | - | 180.4 (0.90) | - |
| 4-Aminobenzene sulfonic acid | Parts by mass (mol) | 138.6 (0.80) | 121.2 (0.70) | 138.6 (0.80) | 155.9 (0.90) | 121.2 (0.70) | 121.2 (0.70) | 138.6 (0.80) | 138.6 (0.80) | 138.6 (0.80) |
| Paraformaldehyde | Parts by mass (mol) | 67.6 (2.25) | 63.8 (2.13) | 67.6 (2.25) | 71.3 (2.38) | 63.8 (2.13) | 63.8 (2.13) | 67.6 (2.25) | 67.6 (2.25) | 67.6 (2.25) |
| 37 mass% formalin | Parts by mass (mol) | - | - | - | - | - | - | - | - | - |
| Water | Parts by mass (mol) | 800.7 (44.48) | 756.9 (42.05) | 789.0 (43.83) | 831.8 (48.21) | 746.2 (41.46) | 753.9 (41.88) | 813.8 (45.16) | 747.3 (41.47) | 802.4 (44.58) |
| Sodium hydroxide | Parts by mass (mol) | 41.6 (1.04) | 36.4 (0.91) | 36.8 (0.92) | 41.4 (1.04) | 32.2 (0.81) | 32.4 (0.81) | - | 36.8 (0.92) | 46.4 (1.16) |
| Potassium hydroxide | Parts by mass (mol) | - | - | - | - | - | - | 51.6 (0.92) | - | - |
| Amount of basic compound (mol) [vs 1 mol of 4-aminobenzenesulfonic acid] | | 1.30 | 1.30 | 1.15 | 1.16 | 1.16 | 1.16 | 1.15 | 1.15 | 1.45 |
| Nonvolatile matter content (mass%) | | 29.5 | 28.8 | 29.2 | 29.8 | 29.0 | 29.2 | 29.8 | 29.4 | 29.6 |
| pH | | 8.5 | 8.4 | 8.6 | 8.7 | 8.3 | 8.6 | 8.2 | 8.3 | 8.8 |
| Weight average molecular weight (Mw) | | 52000 | 61000 | 59000 | 56000 | 62000 | 55000 | 51000 | 60000 | 65000 |
| Charge acceptability | | 112 | 116 | 114 | 108 | 116 | 110 | 114 | 108 | 111 |
| Discharge characteristics | | 105 | 100 | 103 | 105 | 95 | 100 | 105 | 103 | 100 |
| Cycle characteristics | | 200 | 240 | 220 | 180 | 250 | 170 | 180 | 180 | 200 |
| Preservation stability (months) | | 4 | 4 | 4 | 3 | 3 | 2 | 4 | 4 | 3 |

[Table 2]

| | | Comparative Example 1 | Comparative Example 2 | Comparative Example 3 | Comparative Example 4 | Comparative Example 5 |
|---|---|---|---|---|---|---|
| Bisphenol A | Parts by mass (mol) | 228.3 (1.00) | 228.3 (1.00) | 210.0 (0.92) | 148.4 (0.65) | 182.6 (0.80) |
| Bisphenol S | Parts by mass (mol) | - | - | 20.0 (0.08) | 87.6 (0.35) | 50.1 (0.20) |
| Bisphenol F | Parts by mass (mol) | - | - | - | - | - |
| 4-Aminobenzenesulfonic acid | Parts by mass (mol) | 173.2 (1.00) | 346.4 (2.00) | 138.6 (0.80) | 138.6 (0.80) | 138.6 (0.80) |
| Paraformaldehyde | Parts by mass (mol) | - | - | 67.6 (2.25) | 67.6 (2.25) | 67.6 (2.25) |
| 37 mass% formalin | Parts by mass (mol) | 210.8 (2.60) | 291.9 (3.60) | - | - | - |
| Water | Parts by mass (mol) | 738.0 (41.00) | 738.0 (41.00) | 788.3 (43.79) | 798.2 (44.34) | 790.0 (43.89) |
| Sodium hydroxide | Parts by mass (mol) | 40.0 (1.00) | 80.0 (2.00) | 36.8 (0.92) | 36.8 (0.92) | 35.2 (0.88) |
| Potassium hydroxide | Parts by mass (mol) | - | - | - | - | - |
| Amount of basic compound (mol) [vs 1 mol of 4-aminobenzenesulfonic acid] | | 1.00 | 1.00 | 1.15 | 1.15 | 1.10 |
| Nonvolatile matter content (mass%) | | 38 | 44 | 29.7 | 29.5 | 29.7 |
| pH | | 7.4 | 7.7 | 7.7 | 7.6 | 7.8 |
| Weight average molecular weight (Mw) | | 56300 | 21100 | 48000 | 38000 | 48000 |
| Charge acceptability | | 100 | 95 | 100 | 100 | 100 |
| Discharge characteristics | | 100 | 105 | 90 | 90 | 95 |
| Cycle characteristics | | 100 | 80 | 120 | 120 | 150 |
| Preservation stability (months) | | 1 | 1 | 1 | 1 | 1 |

It can be confirmed that the cycle characteristics in the Examples is excellent as compared with the Comparative Examples. In addition, in the Examples, it can be confirmed that the excellent charge acceptability, discharge characteristics, cycle characteristics and storage stability are all provided.

**Industrial Applicability**

The present invention can provide a bisphenol-based resin which can obtain the excellent cycle characteristics in a lead acid battery, and a method for manufacturing the same. In addition, the present invention can provide an electrode and a lead acid battery that use the above described bisphenol-based resin, and provide methods for manufacturing these.

**Claims**

1. A bisphenol-based resin comprising a structural unit derived from a reaction of (a) a bisphenol-based compound, (b) at least one selected from the group consisting of an aminobenzenesulfonic acid and an aminobenzenesulfonic acid derivative, and (c) at least one selected from the group consisting of formaldehyde and a formaldehyde derivative, under the presence of a basic compound, wherein
a total amount of bisphenol S and a bisphenol S derivative in the component (a) is 0.10 to 0.30 mol with respect to 1.00 mol of the component (a), and
an amount of the basic compound is 1.15 mol or more with respect to 1.00 mol of the component (b).

2. The bisphenol-based resin according to claim 1, wherein an amount of the component (b) is 0.50 to 0.95 mol with respect to 1.00 mol of the component (a).

3. The bisphenol-based resin according to claim 1 or 2, wherein an amount of the component (c) is 1.80 to 3.00 mol in terms of formaldehyde with respect to 1.00 mol of the component (a).

4. The bisphenol-based resin according to any one of claims 1 to 3, wherein the component (c) comprises paraformaldehyde.

5. The bisphenol-based resin according to any one of claims 1 to 4, wherein the basic compound comprises at least one selected from the group consisting of sodium hydroxide and potassium hydroxide.

6. The bisphenol-based resin according to any one of claims 1 to 5, wherein the amount of the basic compound is 1.15 to 1.50 mol with respect to 1.00 mol of the component (b).

7. An electrode comprising the bisphenol-based resin according to any one of claims 1 to 6.

8. A lead acid battery comprising the electrode according to claim 7.

9. A method for manufacturing a bisphenol-based resin comprising a step of reacting: (a) a bisphenol-based compound; (b) at least one selected from the group consisting of an aminobenzenesulfonic acid and an aminobenzenesulfonic acid derivative; and (c) at least one selected from the group consisting of formaldehyde and a formaldehyde derivative, under the presence of a basic compound, to obtain a bisphenol-based resin, wherein
a total amount of bisphenol S and a bisphenol S derivative in the component (a) is 0.10 to 0.30 mol with respect to 1.00 mol of the component (a), and
an amount of the basic compound is 1.15 mol or more with respect to 1.00 mol of the component (b).

10. The method for manufacturing a bisphenol-based resin according to claim 9, wherein an amount of the component (b) is 0.50 to 0.95 mol with respect to 1.00 mol of the component (a).

11. The method for manufacturing a bisphenol-based resin according to claim 9 or 10, wherein an amount of the component (c) is 1.80 to 3.00 mol in terms of formaldehyde with respect to 1.00 mol of the component (a).

12. The method for manufacturing a bisphenol-based resin according to any one of claims 9 to 11, wherein the component (c) comprises paraformaldehyde.

**13.** The method for manufacturing a bisphenol-based resin according to any one of claims 9 to 12, wherein the basic compound comprises at least one selected from the group consisting of sodium hydroxide and potassium hydroxide.

**14.** The method for manufacturing a bisphenol-based resin according to any one of claims 9 to 13, wherein the amount of the basic compound is 1.15 to 1.50 mol with respect to 1.00 mol of the component (b).

**15.** A method for manufacturing an electrode, comprising a step of manufacturing an electrode by using the bisphenol-based resin obtained by the method for manufacturing a bisphenol-based resin according to any one of claims 9 to 14.

**16.** A method for manufacturing a lead acid battery, comprising a step of obtaining the electrode by the method for manufacturing an electrode according to claim 15.

Fig.1

# Fig.2

## INTERNATIONAL SEARCH REPORT

| | International application No. |
|---|---|
| | PCT/JP2016/076763 |

A. CLASSIFICATION OF SUBJECT MATTER
*C08G14/073*(2006.01)i, *H01M4/14*(2006.01)i, *H01M4/20*(2006.01)i, *H01M4/62*(2006.01)i

According to International Patent Classification (IPC) or to both national classification and IPC

B. FIELDS SEARCHED

Minimum documentation searched (classification system followed by classification symbols)
C08G8/00-16/06, C08L1/00-101/14, H01M4/00-4/62

Documentation searched other than minimum documentation to the extent that such documents are included in the fields searched

| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>A | JP 9-151229 A (Nippon Paper Industries Co., Ltd.),<br>10 June 1997 (10.06.1997),<br>claims 1 to 7; paragraphs [0010], [0017], [0050]<br>(Family: none) | 1-6,9-14<br>7,8,15,16 |
| A | WO 2016/031772 A1 (Shin-Kobe Electric Machinery Co., Ltd.),<br>03 March 2016 (03.03.2016),<br>claims 1 to 4; paragraph [0086]<br>(Family: none) | 1-16 |

☒ Further documents are listed in the continuation of Box C.　　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>28 September 2016 (28.09.16) | Date of mailing of the international search report<br>11 October 2016 (11.10.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

| International application No. |
|---|
| PCT/JP2016/076763 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2016-157663 A (Hitachi Chemical Co., Ltd.), 01 September 2016 (01.09.2016), claims 1 to 3; paragraph [0058] (Family: none) | 1-16 |
| A | WO 1997/037393 A1 (Aisin Seiki Co., Ltd.), 09 October 1997 (09.10.1997), claims 1 to 7; page 13, table 2 & US 6074782 A claims 1 to 11; columns 9 to 10 | 1-16 |
| A | JP 2010-270252 A (Ricoh Co., Ltd.), 02 December 2010 (02.12.2010), claims 1 to 4; paragraph [0044] (Family: none) | 1-16 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 199737393 A